# EUROPEAN PATENT SPECIFICATION

(11) **EP 0 574 012 B1**
(45) Date of publication and mention of the grant of the patent: **30.12.1998**
(21) Application number: 93109396.7
(22) Date of filing: 11.06.1993
(51) Int. Cl.: B01J 37/02, F01N 3/20, B01D 53/86

(54) **Exhaust gas catalytic purifier construction**
Konstruktion einer katalytischen Auspuff-Gas-Reinigungs-Anlage
Construction d'un dispositif catalytique pour la purification d'un gaz d'échappement

(30) Priority: 10.06.1992 JP 177584/92
(43) Date of publication of application: 15.12.1993
(73) Proprietor: SHIMADZU CORPORATION, Nakagyo-ku, Kyoto 604 (JP)
(72) Inventor: Fukui, Isao, Uji-shi, Kyoto 611 (JP); Kuroda, Shinichi, Ibaraki-shi, Osaka 567 (JP); Hiraishi, Masahiro, Ukyo-ku, Kyoto 615 (JP); Inoue, Koji, Frora-haitsu Uzumasa 306, Ukyo-ku, Kyoto 616 (JP); Takahashi, Masamitsu, Hiroshima-shi, Hiroshima-ken 732 (JP); Ihara, Kazunori, (deceased) (JP); Murakami, Hiroshi, Hiroshima-shi, Hiroshima-ken 739-03 (JP); Tanaka, Tetsuhiro, Hiroshima-shi, Hiroshima-ken 731-01 (JP); Miyaura, Shinobu, Hiroshima-shi, Hiroshima-ken 733 (JP)
(74) Representative: WILHELMS, KILIAN & PARTNER Patentanwälte

(56) References cited:
- EP-A- 0 149 318
- EP-A- 0 198 435
- EP-A- 0 283 910
- WO-A-92/14547
- FR-A- 2 316 906
- US-A- 3 581 489
- US-A- 3 998 758

## Description

### BACKGROUND OF THE INVENTION

### Technical Field

The present invention relates to fabrication of exhaust gas catalytic conversion systems; more specifically it relates to structure arising from a particular method of fabrication which enables inductive heating to activate exhaust gas purifying catalyst, in application of the catalytic conversion system in an internal combustion motor vehicle.

### Description of the Background

Internal combustion vehicle catalytic convertors are effective to treat noxious components such as HC, CO, and NOₓ contained in gases exhausting from the engine by breaking them down into less environmentally contaminating derivatives prior to their exit into the atmosphere.

As regulations imposed on manufacturers governing the levels of such pollutants in vehicle exhaust emission which are permissible have become more and more stringent, the demand for improvements in exhaust gas catalytic purification systems has increased.

One type of such systems incorporates a catalyst applied as a layer onto the surface of exhaust system carrier materials including a catalytic converter support network as well as exhaust conduits. A general manufacturing requirement therein is to form the catalyst layer such that it is not liable to peel away from the base material.

Accordingly, the catalyst layer can be formed on the surface of the catalyst carrier via an intermediate layer. One example is described in Japanese Patent Laid-Open No. 71898/1982, wherein oxide whiskers are grown on the surface of a metallic carrier, composed of a ferric stainless steel alloy containing aluminum, to form a catalytic bonding intermediate layer, onto which a catalyst layer is formed. The bonding layer whiskers superficially formed on the surface of the metallic carrier firmly adhere the catalyst layer. Furthermore, the bonding layer, being superficially formed on the metallic carrier though a chemical reaction therewith, is adhered to it very firmly.

A significant drawback of this method of bonding a catalyst to base material is that it takes a considerable amount of time to form the bonding layer.

Since catalytic materials are effective at the high temperatures of the exhaust gas itself in breaking down the noxious components thereof, purification performance during warm-up to normal operating temperature following engine cold start is poor, and hydrocarbons and other untreated pollutants temporarily are exhausted into the atmosphere. The cumulative effect from the multitude of motor vehicles is significant enough to warrant treatment.

Recent attempts made to enhance the catalytic materials themselves to be effective for exhaust gas purification at the lower temperatures during engine warm-up have met with limited success.

Accordingly, means to accelerate the heating of the exhaust-treating catalyst in advance of engine warm-up have been proposed, as disclosed for example in Japanese Utility Model Application Laid-Open No. 36324/1974, which describes the installation of an electric heater in close proximity to the end of a monolithic-structured catalyst and upstream with respect to exhausting gas flow.

Therein, heat energy produced by electric current through heater wire spaced apart from the catalyst-bearing support heats gas at the mouth of the catalytic converter, and the heated gas in turn heats the catalyst as it enters the monolithic structure. The heated gas superficially contacting the catalyst does not serve as an efficient heat transfer medium to effectively heat the catalyst, since its temperature drops considerably as a consequence of mixing with surrounding gas. The amount of electrical current supplied to the heater necessary to overcome this problem is too great to be practical for apparatus in automobile installations.

Another proposal is in Japanese Utility Model Laid-Open No. 67609/1988. Specifically therein, a conductive metallic base material is used as a catalyst carrier, and the carrier is electrically energized in order to heat the exhaust-purifying catalyst to a high temperature.

This way of preheating the catalyst by electrically energizing the metallic carrier is not satisfactory in that considerable time is taken to heat the metallic carrier to sufficiently high temperature, tending to nullify the purpose of catalytic preheating. Moreover, since a large amount of electricity is drawn from the battery by this preheating system immediately after the engine is started, a heavy burden is imposed on it.

The metal support carrying the catalyst and as such forming a monolithic construction is integral in the electric heating circuit, which is liable to bring about the drawback of localized heating of the support, such that considerable differences in temperature will exist from one portion thereof to another. Consequently, different rates of expansion arise, causing separation of the catalyst material from the support.

Japanese Utility Model Application Laid-Open No. 124412/1974 proposes a monolithic catalyst assembly which comprises a platinum catalyst carried in a monolithic structure on a support of silicon carbide which serves as a heating element, wherein the catalyst may be heated upon application of an electric current to the heating element.

Similarly, Japanese Patent Application Laid-Open No. 295184/1991 proposes a honeycomb-structured support as a catalyst carrier, formed as a product of powder metallurgy, to which an electric current is directly applied in order to heat it.

Wherein the catalyst support of the monolithic construction is designed to function itself as a heating element, it is essential that the support, in composing an electric circuit, have a controlled resistance, whether the support is made of silicon carbide or a metal, or formed from a product of powder metallurgy. This type of construction, however, not only adds to the cost of the catalytic purifier apparatus, but also presents a problem in reliability, since an undesirable change in resistance is likely to occur during cycles of actual operation as a result of, for example, the separation of metal-to-metal joints wherein the support is formed from a metal foil, or as a result of partial cracking of a sintered support. Moreover, production of a reliable and satisfactory catalytic purifier construction is hindered by the difficulty of adequately forming electrode portions on the foregoing support.

### SUMMARY OF THE INVENTION

Among the advantages sought is a method of forming exhaust gas converting catalyst onto carrier base material, so as to eliminate peeling away of the catalyst despite prolonged use.

It is additionally sought to realize the bonding of catalyst to catalytic converter catalyst support materials which would otherwise be deformed by the heat required by conventional bonding methods in a monolithic construction; and to realize the bonding of catalyst to the bore of exhaust conduits to provide auxiliary catalytic conversion along the course of the exhaust system as well.

A further advantage sought is the rapid heating of the conversion catalyst in advance of heating of the exhaust system components by the exhausting gases as the engine warms up to operating temperature.

Further it is desirable to improve the efficiency of preheating of catalytic conversion components, keeping draining load on the engine ignition system battery to a minimum.

Accordingly, the present invention relates to a method of bonding a catalyst for exhaust gas purifying catalytic conversion to both metallic and lithic substrates, in the exhaust system of internal combustion engine motor vehicles. The method comprises the inventive step of forming a catalyst bonding layer by chemical vapor deposition, which can be carried out at temperatures on the order of those developed by the exhausting gas during operation, such that bonding of strength comparable to higher-temperature methods can be effected on carrier materials which otherwise might become deformed by higher temperature bonding heat.

The invention also relates to rapid, efficient preheating of the catalyst as a measure against further reduction of noxious vehicle emissions to comply with or exceed increasingly stringent government regulations, yet at the same time minimizing power drain on the motor vehicle engine battery used to supply the catalyst preheating energy.

Furthermore the invention can provide electromagnetic inductive heating of the inventive catalyst bonding layer to heat at vehicle start-up the catalyst of a catalytic converter included in the exhaust system, with maximum speed and minimum battery drain.

Therein, if the catalyst is carried on a ceramic support lattice integral with an encompassing electrically and thermally insulating layer, inductive heating is yet more efficient, since the insulating material contains the heat of the catalyst electromagnetically induced therethrough.

Thus inductive heating realizes advantages of efficiency and stability, since the resistance or resistivity of the heated element, in being heated uniformly, remains consistent in that problems due to mechanical connections are eliminated. Moreover, inductive heating ensures that engine ignition battery power is used most conservatively.

An exhaust gas catalytic purifier construction in one aspect of the present invention comprises a ceramic honeycomb-structured catalyst carrier to which a catalyst is adhered via a bonding layer, which may be electrically conductive, formed onto the ceramic carrier by chemical vapor deposition. An electrically and thermally insulating layer is formed peripherally on the catalyst carrier, thereby composing a monolithic catalytic converter base construction. Further, an induction heating coil may be wound onto the catalytic converter insulating layer, and the coil may be fixed in the construction by a heat-resistant layer of ceramic or the like material spray-coated or fired on to encompass the monolithic construction.

An exhaust gas catalytic purifier construction in another aspect of the present invention teaches the inductive heating of a catalytic converter which comprises either a metallic catalyst carrier, itself induced, via an heating induction coil peripherally surrounding the carrier and separated from it by an insulating layer, to heat the catalyst, or a ceramic carrier, in which a heating current is induced via an induction coil.

In a further aspect, an exhaust gas catalytic purifier construction is divided into a main catalytic converter portion comprising the ceramic honeycomb-structured catalyst carrier to which catalyst is adhered via the CVD-deposited bonding layer, and an inductively heating sub-portion, having a metallic support carrying catalyst either via the CVD-deposited bonding layer, or by conventional means, of size to heat sufficient catalyst to effect exhaust-fume purifying catalytic conversion in accordance with lower engine speeds during warm-up, for maximum efficiency both in catalytic conversion effectiveness and in battery power use.

Alternatively, the sub-portion can comprise a ceramic catalyst carrier bearing an electrically conductive layer partially formed on the carrier by, for example, chemical vapor deposition, so as to have a predetermined resistance. Current can be applied directly to, or induced in, the conductive layer in order to heat the catalyst. Also, the sub-portion can be heated directly wherein the catalyst carrier is the metallic support.

Yet a further aspect of the present invention defines a method to achieve an exhaust gas catalytic purifier construction wherein a catalytic bonding layer is formed by chemical vapor deposition onto base material comprising components of an engine exhaust system. Therein, the bonding layer consists of either a ceramic or an inter-metallic metallic compound of columnar-shaped crystals; and a catalyst layer is formed onto the bonding layer.

In still another aspect of the present invention a catalytic bonding layer is deposited by chemical vapor deposition to the metallic exhaust conduit of an internal combustion motor vehicle exhaust system to effect catalytic conversion exhaust gas purification therein. The catalyst can be heated by means auxiliary to the heating due to the exhausting gases of combustion; for example by applying an electric current directly to the bonding layer, which will be metallic. In this case, an insulating layer is initially applied by chemical vapor deposition to the bore of the exhaust conduit, and then the bonding layer is deposited onto the insulating layer.

The foregoing and other objects and advantages will be more fully apparent from the following detailed description, which, together with the drawings, is illustrative of a preferred and other embodiments of the present invention, without intending to be restrictive of such modifications as might become apparent to persons skilled in this art.

### BRIEF DESCRIPTION OF THE DRAWINGS

Fig. 1(a) is a magnified elevational view of a catalyst-carrying metallic support network of an exhaust gas catalytic purifier construction;
Fig. 1(b) is a partly in sectional view corresponding to Fig. 1(a);
Fig. 2 is a magnified partial view in elevation of a catalyst-carrying electrically nonconductive support configured in a honeycomb structure of an exhaust gas catalytic purifier construction;
Fig. 3 is a magnified partial view in elevation of a catalyst-carrying metallic support configured in a honeycomb-laminar structure of an exhaust gas catalytic purifier construction;
Fig. 4 is a graph illustrating morphological characteristics of substances deposited by the thermal chemical vapor deposition method used in the present invention for given parameters of reaction temperature and concentration of raw material gases;
Fig. 5(a) is a micrograph showing surface structure of a gross-structured crystal layer of WₓC, in which the spacing between the hyphens in the lower right represents 10 µm;
Fig. 5(b) is a micrograph showing surface structure of a columnar-shaped crystal layer of WₓC, in which the spacing between the hyphens in the lower right represents 2.0 µm;
Fig. 6 is a schematic illustration of an exhaust gas catalytic purifier construction fabricated according to a method of the present invention;
Fig. 7 is a cross sectional view corresponding to the embodiment as shown in Fig. 6;
Fig. 8 is a magnified partial view corresponding to Fig. 7;
Fig. 9 is a partly in sectional view corresponding to Fig. 8;
Fig. 10 is a cross sectional view of a modification of the exhaust gas catalytic purifier construction illustrated in Fig. 6;
Fig. 11 is a partly in sectional view of the modification illustrated in Fig. 10;
Fig. 12 is a schematic illustration of another exhaust gas catalytic purifier construction fabricated according to a method of the present invention;
Fig. 13 is a schematic illustration of an exhaust gas catalytic purifier construction in a modification of the embodiment;
Fig. 14 is a schematic illustration of an exhaust gas catalytic purifier construction in a further modification of the embodiment;
Fig. 15 is a schematic illustration of another exhaust gas catalytic purifier construction fabricated according to a method of the present invention;
Fig. 16 is a schematic illustration of an exhaust gas catalytic purifier construction in a modification of the exhaust gas catalytic purifier construction illustrated in Fig. 15;
Fig. 17 is a schematic illustration of another exhaust gas catalytic purifier construction fabricated according to a method of the present invention;
Fig. 18(a) is a schematic elevational view illustrating a preheating-type catalytic converter fabricated according to a method of the invention;
Fig. 18(b) is a vertical cross section corresponding to Fig. 18(a);
Fig. 19(a) is a schematic elevational view illustrating a preheating-type catalytic converter in a modification of the catalytic converter illustrated in Figs. 18 (a) and (b);
Fig. 19(b) is a vertical cross section corresponding to Fig. 19(a);
Fig. 20(a) is a schematic elevational view illustrating a further preheating-type catalytic converter;
Fig. 20(b) is a cross sectional view corresponding to Fig. 20(a);
Fig. 21(a) is a schematic view of another engine exhaust conduit fabricated according to a method of the invention; and
Fig. 21(b) is a cross sectional view corresponding to Fig. 21(a).

### DETAILED DESCRIPTION OF PREFERRED EMBODIMENTS

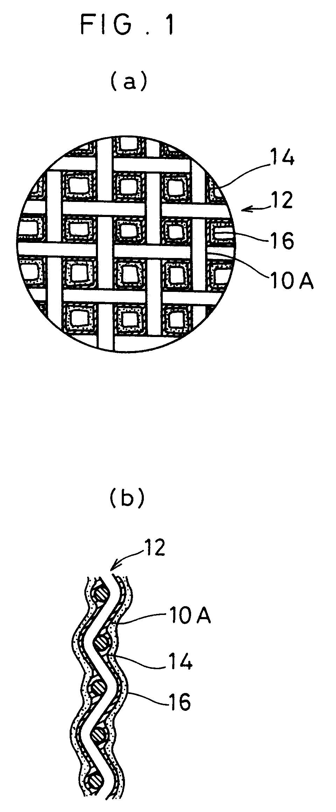

Fig. 1(a), a magnified view seen in the direction of exhaust gas flow, and Fig. 1(b), a cross-sectional partial view thereof, illustrate a catalyst carrier support network in an exhaust gas catalytic purifier construction according to an aspect of the invention, consisting of metallic thin wires 10A, which are woven vertically and horizontally into mesh sheets 12 further tiered in the exhaust gas flow direction.

A bonding layer 14 of columnar-shaped crystals, having a thickness of hundreds to thousands of microns is formed from a ceramic, or from an intermetallic compound, by low-pressure thermal CVD on the surface of the metallic thin wires 10A. The ceramic or intermetallic compound can be tungsten carbide (WC), molybdenum carbide (Mo₂C), silicon carbide (SiC), or alloys thereof; or tungsten silicide (WSiₓ), molybdenum silicide (MoSiₓ), tantalum silicide (TaSiₓ), titanium silicide (TiSiₓ), or alloys thereof.

A catalyst layer 16 is coated on the surface of the bonding layer 14 by a well-known method.

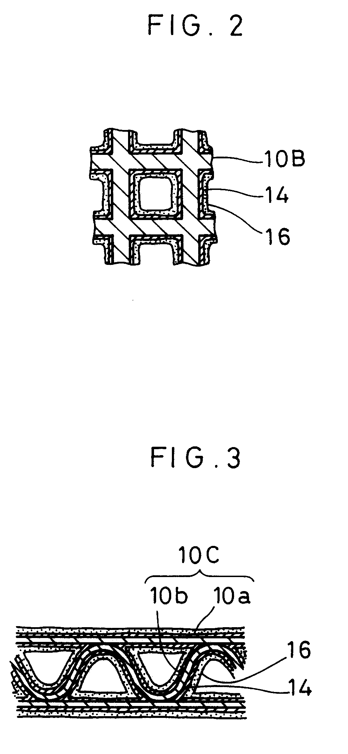

Fig. 2 is a view seen in the direction of exhaust gas flow of a catalytic converter carrier honeycomb-structured support in an exhaust gas catalytic purifier construction in a modification of the foregoing aspect. The carrier is a honeycomb molding 10B of carbon or ceramic. A bonding layer 14 and a catalyst layer 16, similar to their counterparts described above, are superficially formed on the molding 10B.

Fig. 3 is a view seen in the direction of exhaust gas flow of a catalytic converter carrier honeycomb-laminar support in an exhaust gas catalytic purifier construction in a further modification of the foregoing. The catalyst carrier is a honeycomb metallic support 10C that is fabricated by laminating metallic flat sheets 10a and metallic corrugated sheets 10b alternately. A bonding layer 14 and a catalyst layer 16 similar to their counterparts just described are formed on the surface of the metallic carrier 10C. Alternatively, the honeycomb metallic carrier 10C is manufactured by stacking numerous sheets of given dimensions each consisting of a metallic flat sheet 10a and a metallic corrugated sheet 10b, or by spirally winding long sheets composed of the metallic flat sheet 10a and the metallic corrugated sheet 10b, respectively.

It is to be noted that the base material used in the present invention is not limited to the foregoing. It can also be a carrier consisting of a sheet or felt made of thin wires or carbon fibers (graphite), ceramic, or metal; a carrier made of a thin metal sheet, or a carrier made of a honeycomb, felty, or three-dimensional meshy (filter-like) integral molding of a ceramic. The three-dimensional meshy molding is desired in that it enables highly efficient purification of exhaust gas by the carried catalyst layer 16, since the fumes circulate among the numerous cells.

The bonding layer 14 can be formed by any one of thermal CVD methods (atmospheric-pressure CVD and low-pressure CVD), plasma-assisted CVD, photochemical vapor deposition, ECR plasma CVD, and other CVD processes. Thermal CVD is especially desirable because it has the following features: (1) the bonding layer can be formed on various kinds of metallic as well as non-metallic base material; (2) a bonding layer consisting of a predetermined multi-component alloy can be formed; (3) a bonding layer which has very excellent wear and abrasion resistance and excellent anticorrosion properties can be fabricated from TiC, SiC, BN, and other materials; (4) the bonding layer can be formed rapidly at a rate of several microns to hundreds of microns per minute; (5) since reactive gas during the CVD process can enter blind spots well, if the process is conducted at a relatively low pressure, then a bonding layer can be formed even inside thin, deep holes or other convolutions; (6) since a bonding layer of high purity can be formed at a relatively high temperature, a bonding layer having little internal distortion and few pinholes is realized, thus yielding excellent adhesion and elasticity characteristics; (7) it is not necessary to use a high voltage; (8) the machine is simple and a high vacuum is not necessary, therefore, productivity is high; and (9) it is easy to take preventative measures to prevent against hazards to the environment.

In the thermal CVD methods, low-pressure chemical vapor deposition is carried out in a reaction chamber evacuated to 0.1 to 10 torr. Compared with atmospheric-pressure CVD, low-pressure CVD has the following advantages: (1) the mean free paths of reactive gases and carrier gas and their diffusivities are increased, thus greatly improving the film thicknesses and the distribution of its specific resistivity, and reducing the amount of reactive gases consumed; (2) the reaction chamber takes the form of a diffusion furnace and, therefore, it is easy to control temperature; also the machine is simple in structure, hence reliability and throughput are improved greatly; and (3) less foreign substances adhere to the surface of the bonding layer.

Examples of thermal CVD methods include a method making use of a fluoride such as WF₆ or MoF₆, another making use of a chloride such as WCl₆ or MoCL₆, and one utilizing a carbide such as W(CO)₆ or Mo(CO)₆. The thin film condition of the bonding layer created by any one of these thermal CVD methods differs, depending on the reaction temperature (temperature of the processed substance) and on the concentration and flow rate of the raw material gases. A heatproof bonding layer having a large surface area can be obtained by appropriately selecting these conditions.

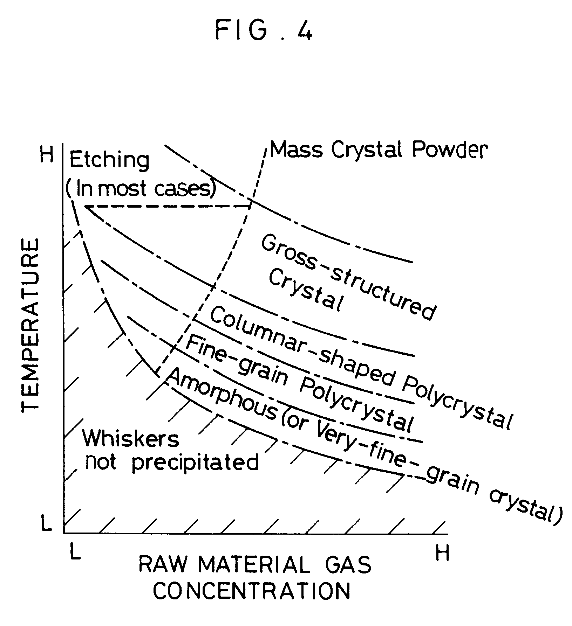

Fig. 4 graphs characteristics illustrating the effects of the reaction temperature and the concentration of the raw material gases on the morphology of the deposited substance. It is necessary to set the reaction temperature and the concentration of the raw material gases in such a way that the deposited substance takes the form of a layer of gross-structured crystals or a film of columnar-shaped polycrystal. Preferably, the reaction temperature is in excess of 1000°C for silicon carbide (SiC), in excess of 800°C for alumina (Al₂O₃), and 600-800°C for molybdenum carbide (Mo₂C) and molybdenum silicide (MoSiₓ).

The strength of the crystal obtained in the formation of the bonding layer 14 differs according to the kind of the base material. Wherein a bonding layer consisting of WₓC having a thickness of 40 µm is formed on the surface of a base material made of 92% Al₂O₃, a tensile strength exceeding 10 kgf x mm⁻² is obtained. Wherein a bonding layer consisting of WₓC having a thickness of 40 µm is formed on the surface of a base material made of a ferric stainless steel containing 20% by weight of Cr and 5% by weight of Al as principal constituents, the remaining part being Fe, a tensile strength exceeding 10 kgf x mm⁻² is obtained. Wherein sheets of the ferric stainless steel are coupled together by spot welding, the tensile strength is about 3 kgf x mm⁻². Wherein sheets of the ferric stainless steel are brazed together, the tensile strength is about 10 kgf x mm⁻². Therefore, the bonding layer 14 formed by CVD can be adopted in bonding together the metallic flat sheets 10a and the metallic corrugated sheets 10b of the metallic carrier 10C of the corresponding modification described earlier.

A specific example of method of fabricating an exhaust gas catalytic purifier construction according to foregoing aspects of the present invention will now be described.

First, "Foam Filter," manufactured by Toshiba Ceramics Co., Ltd. was prepared as a filter-like ceramic base material. The filter consists of Al₂O₃ and ZrO₂ and can withstand up to 1800°C. Its porosity is 80 to 90%. The filter takes a disk-like form having a diameter of 80 mm and a thickness of 10 mm. The number of cells per inch was 8. A bonding layer 14 of WC was formed on the surfaces of the cells of the ceramic base material by a low-pressure thermal CVD method. Therein, processes were conducted at a reduced pressure of 500 mm Hg at a temperature of 650°C. WF₆/C₆H₆/H₂ gas was passed at flow rates of 0.3 x 10⁻⁵ m³/sec, 0.5 x 10-⁵ m³/sec, and 3 x 10⁻⁵ m³/sec, respectively, for 10 minutes. The surface area of the resulting bonding layer 14 formed on the base material was tens to hundreds of times that of the original base material.

Then, the upper surface of the bonding layer 14 was impregnated with porous alumina. The layer was dried and sintered to form a catalyst carrier layer consisting mainly of porous alumina. This catalyst carrier layer was made by competitive adsorption to carry catalytically active components (Pt/Pd/Ph). Subsequently, the layer was dried, sintered, and activated (or reduced), yielding catalyst layer 16 in finished form.

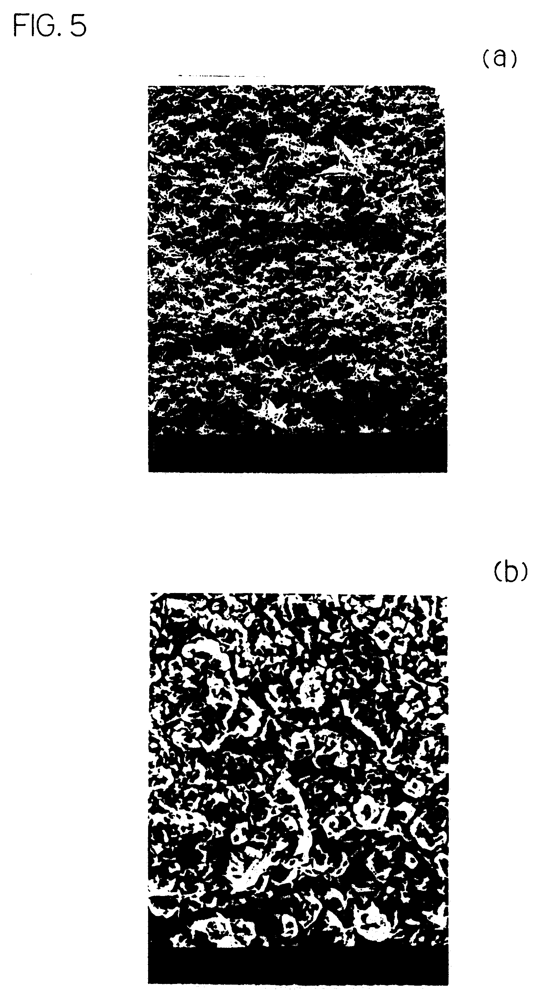

Fig. 5(a) is a micrograph showing the surface structure of a gross-structured crystal layer having a thickness of 30 µm and made of WₓC formed on a ferric stainless steel foil at a reduced pressure and a temperature of 650°C. Fig. 5(b) is a micrograph showing the surface structure of a columnar-shaped crystal layer having a thickness of 30 µm and made of WₓC formed on a ceramic Al₂O₃ at a reduced pressure and a temperature of 800°C. The magnification of the micrograph of Fig. 5(a) is such that the spacing between hyphens appearing near the lower right end of the micrograph is 10 µm. The magnification of the micrograph of Fig. 5(b) is such that the spacing between hyphens appearing near the lower right end of the micrograph is 2.0 µm.

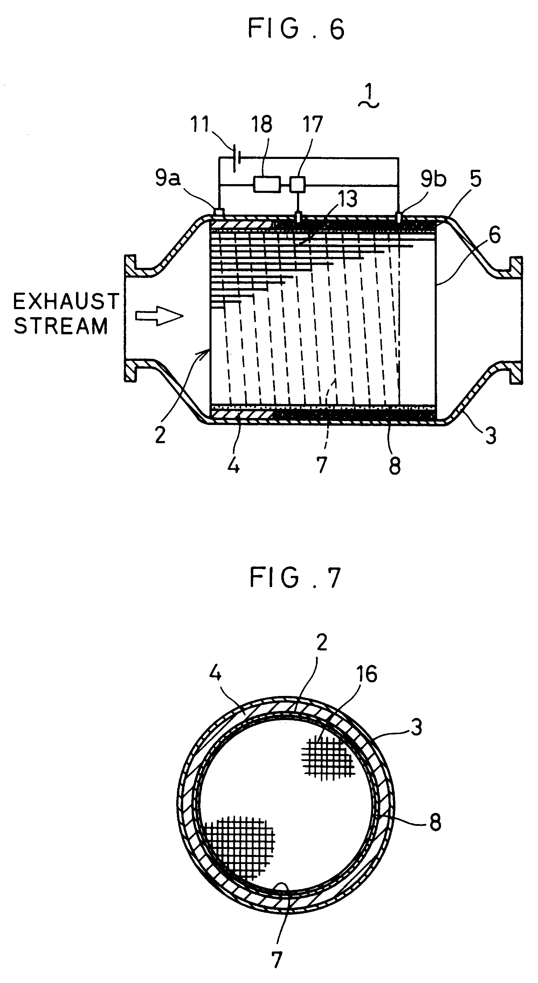

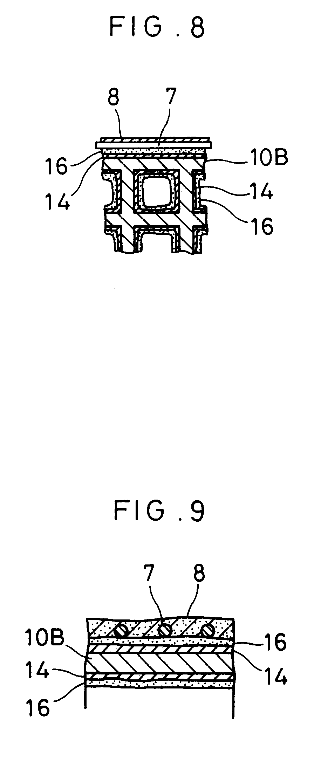

An exhaust gas catalytic purifier construction 1 illustrated in Fig. 6, and as further illustrated cross-sectionally in installation in Fig. 7, which is fabricated according to a method of the present invention comprises a ceramic honeycomb-structured catalyst support 6 carrying a catalyst layer 16 (Fig. 2) via electrically conductive, low specific-heat bonding layer 14 (also Fig. 2), formed onto the ceramic carrier by chemical vapor deposition. An induction heating coil 7 is wound onto the ceramic catalyst support 6 peripherally; and as shown in Figs. 8 and 9, a heat-resistant layer 8 of ceramic or other suitable material is spray-coated or fired on the catalyst support 6 to encompass it, composing a monolithic catalytic converter base construction 2.

The monolithic catalytic converter base construction 2 is mounted into a converter casing 3, circumferentially retained at its exhaust upstream end by a gastight seal 4, and additionally by a cushion 5 downstream thereof, which can be in the form of a wire netting, for example.

Catalyst heating current is electromagnetically induced in the bonding layer 14 via alternating magnetic flux from the induction heating coil 7, which is supplied a high-frequency current through electrodes 9a, 9b from high-frequency generator 18 and regulated by controller 17 in conjunction with temperature sensor 13. Power is supplied by motor vehicle ignition battery 12.

In the catalytic converter thus constructed and equipped, at engine start the induction coil 7 induces a current in the bonding layer 14, which being minimally thin and of low specific heat capacity, heats quickly at comparatively lower levels of current draw. Retaining the catalytically active component in the alumina layer with which it is impregnated, the bonding layer 14 in turn heats the catalyst quickly by thermal transfer. Hence the catalyst is heated at least partially, to effect catalytic conversion of "engine cold" exhausting noxious fumes including hydrocarbons and carbon monoxide, prior to warming otherwise by the "engine hot" exhausting gas upon warm-up to near normal operating temperature, i.e., until the temperature of gases entering the converter reaches about 300°C. At that point the temperature sensor 13, disposed in the monolithic catalytic converter base construction 2, cuts off the current supply to the induction heating coil 7, removing further load on the battery.

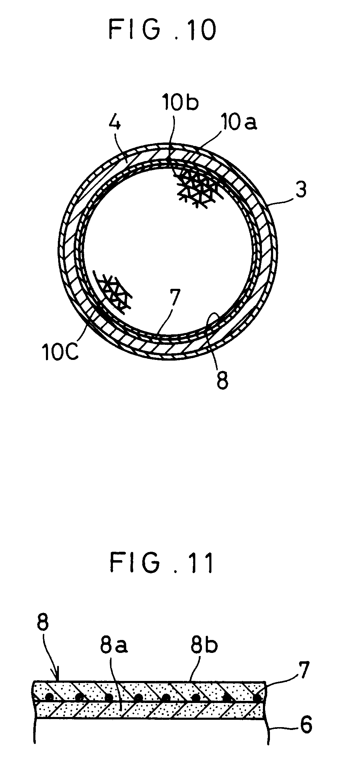

In a different version of the foregoing exhaust gas catalytic purifier construction fabricated according to a method of the present invention, as an alternative to the ceramic honeycomb-structured catalyst support 6, a metallic catalyst carrier, of for example either the wire mesh structure 10A as illustrated in Fig. 1, or the honeycomb of tiered flat and corrugated metal sheets 10C as in depicted in Fig. 3, and as further illustrated cross-sectionally in installation in Fig. 10, can be employed.

In order to heat the catalyst therein, heating of the catalyst carrier 10A or 10C itself is induced via the induction heating coil 7, which peripherally surrounds the metallic support carrier, yet is separated from it by insulating layer 8. Wherein the metallic support is employed as the catalyst carrier in the exhaust gas catalytic purifier construction 1, as shown in Fig. 11, the insulating layer 8 comprises two sections, viz. electrical/thermal insulating layer 8a, and induction heating coil 7 heat-resistant fixing layer 8b. In this case, the coil 7 is not wound directly onto the metallic support 10A/10C.

Enveloping the ceramic catalyst support 6 of the exhaust gas catalytic purifier according to Fig. 6 and 7 by the electrical/thermal insulating layer 8a further improves performance and reliability characteristics of the exhaust gas catalytic purifier construction 1.

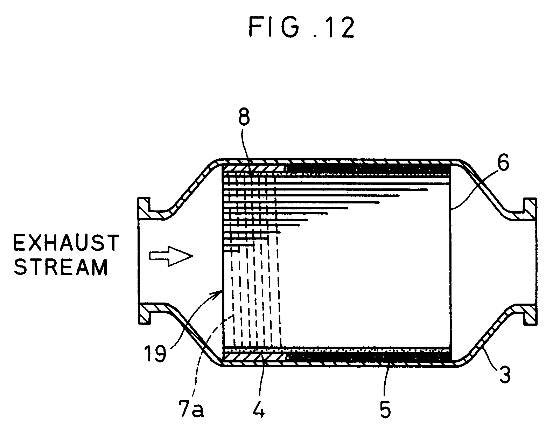

Induction heating of an exhaust gas catalytic purifier construction 1 fabricated according to the method of the present invention in a further aspect can be partial only, for example, concentrated at the exhaust upstream end of the construction as embodied in a catalytic converter. An example is represented in Fig. 12, wherein induction heating coiling 7a is closely wound onto the gastight seal 4 end of the monolithic catalytic converter base construction 19.

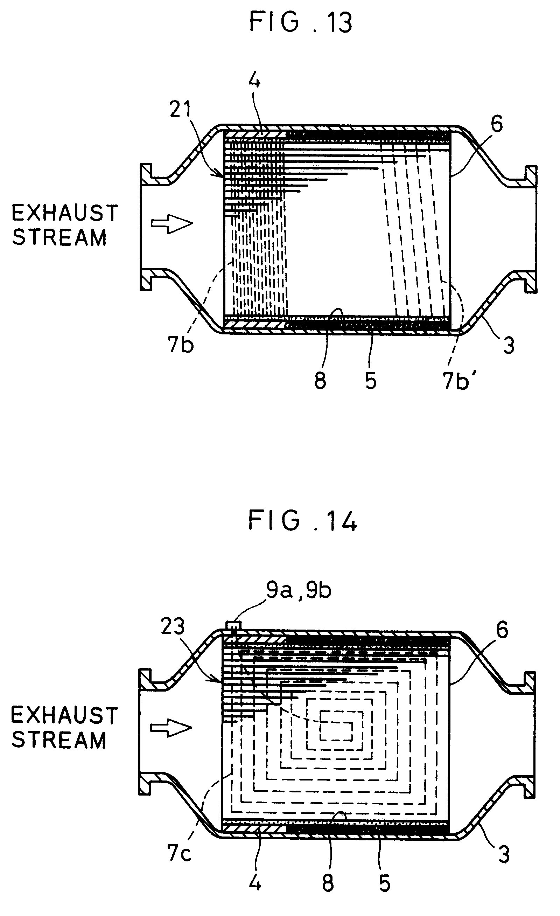

Indeed, it is to be understood that this invention covers any and all manner of winding on the induction heating coiling, as illustrated in further examples by Figs. 13 and 14, which may be chosen to efect heating to suit dimensional requirements. In the embodiment represented by Fig. 13, close-wound coiling 7b about monolithic catalytic converter base construction 21 provides concentrated inductive catalytic heating at the exhaust upstream end, while at the opposite end, widely-spaced partial coiling 7b' can provide latter-stage heating, balancing improved efficiency. In an alternative to concentric circumferential winding, Fig. 14 illustrates spiral winding 7c effective of inductive catalytic heating about monolithic catalytic converter base construction 23, as well the consequent manner of connection to electrodes 9a, 9b.

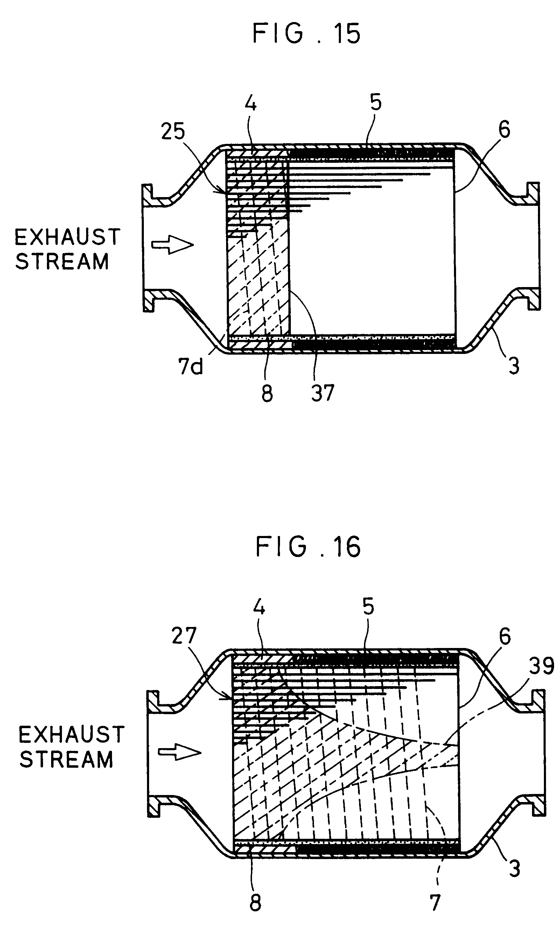

Wherein the bonding layer 14 is non-conductive, or is not itself to be heated, a conductive layer 37 as shown in Fig. 15 having designated resistance may be formed on catalytic heating sub-portion 25, which therein can comprise the ceramic support as catalyst carrier of the monolithic catalytic converter base construction 6. The conductive layer can be heated by the direct application of electric current; inductive heating can be achieved via coiling 7d having relatively fewer turns on insulating layer 8.

Fig. 16 shows a patterning of the conductive layer, indicated as 39 and forming catalytic heating sub-portion 27, analogous in heating effect to the coiling configuration illustrated in Fig. 13. In the construction of Fig. 16, induction heating coiling 7 is wound around monolithic catalytic converter base construction 6 in the same pattern as illustrated in Fig. 6, to effect an efficient gradient of heating with respect to the exhaust gas stream as it enters the converter housing 3.

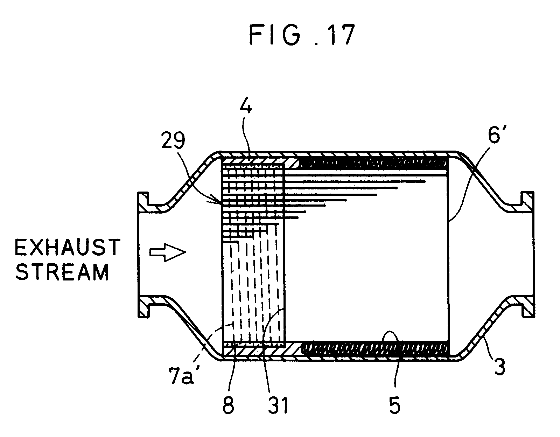

The monolithic catalytic converter base construction can be divided into distinct main portion 6' and inductively heating sub portion 29, as shown in Fig. 17. The main portion 6' comprises the ceramic honeycomb-structured catalyst carrier to which catalyst can be adhered via the CVD-deposited bonding layer; and the sub-portion 29 comprises a metallic support 31, carrying catalyst either via the CVD-deposited bonding layer or by conventional means. In this case, no conductive layer is necessary, since the metallic support 31 is heated inductively by the basic-patterned induction heating coil 7a'. The metallic support 31 as embodied in catalyst-carrying sub-portion 29 can also be heated by energizing it directly.

Additional examples of the exhaust gas purifier fabricated according to a method of the present invention, in which an exhaust gas catalytic purifier construction is formed from catalyst carrier onto which a catalyst bonding layer is formed by chemical vapor deposition are described henceforth. In theses cases the catalyst adhered to the bonding layer is heated by the direct application of electrical energy.

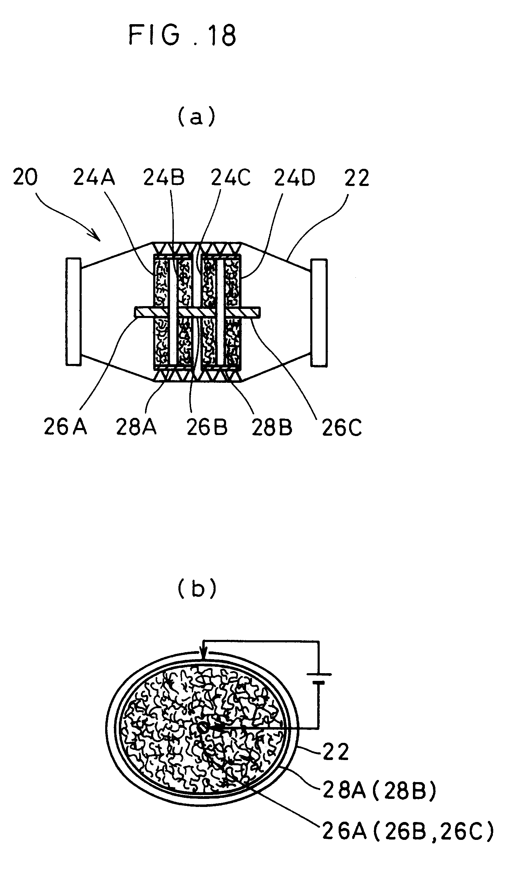

Fig. 18(a) is a side elevation in vertical cross section of a further preheating-type catalytic converter fabricated according to a method of the invention. Fig. 18(b) is a front elevation in vertical cross section of this preheating-type catalytic converter.

As shown, the preheating-type catalytic converter, indicated by 20, has a casing 22 in which disk-like first, second, third, and fourth catalytic filters 24A, 24B, 24C, and 24D are spaced from each other in the direction in which exhaust gas is circulated. Each filter comprises a spongy ceramic carrier and is formed essentially as described above for the exhaust gas purifier according to Fig. 6 and 7. A first central electrode 26A acting as an external connector terminal is inserted in the first catalytic filter 24A. The first catalytic filter 24A and the second catalytic filter 24B are connected together by a first outer electrode 28A. The second catalytic filter 24B and the third catalytic filter 24C are connected together by a second central electrode 26B. The third catalytic filter 24C and the fourth catalytic filter 24D are connected together by a second outer electrode 28B. A third central electrode 26C serving as an external connector terminal is inserted in the fourth catalytic filter 24D. An energizing means (not shown) is mounted between the first central electrode 24A and the third central electrode 24C. A potential difference is developed between the center and the outer periphery of each of the catalytic filters 24A-24D, so that electrical current flows through the bonding layers of the filters 24A-24D. As a result, the catalyst layer is heated to a high temperature.

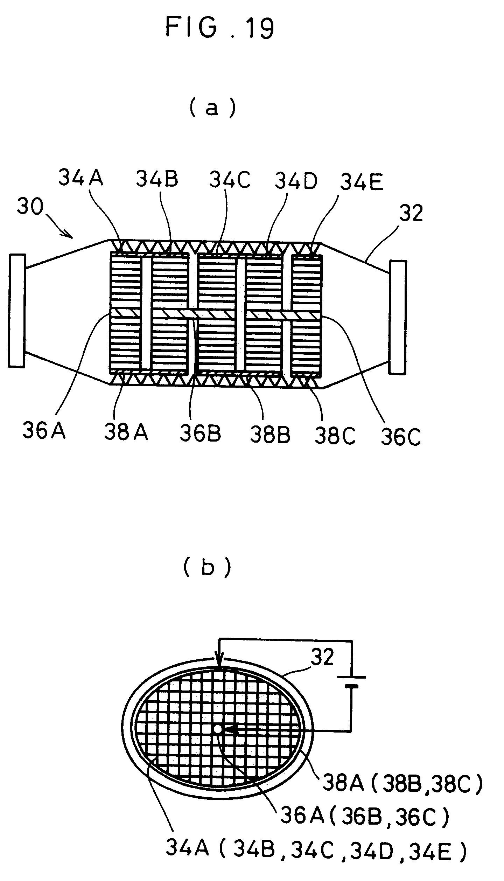

Fig. 19(a) is a side elevation in vertical cross section of a preheating-type catalytic converter forming a first modification of the foregoing example. Fig. 19(b) is a front elevation in vertical cross section of this preheating-type catalytic converter.

As shown in these figures, the preheating-type catalytic converter, indicated by numeral 30, has a casing 32 in which disk-like first, second, third, fourth, and fifth catalytic filters 34A, 34B, 34C, 34D, and 34E, respectively, are spaced from each other in the direction in which exhaust gas is circulated. Each filter is a honeycomb ceramic carrier fabricated from carbon or a silicon carbide composite by the method described earlier. A first central electrode 36A acting as an external connector terminal is inserted in the first catalytic filter 34A. The second catalytic filter 34B and the third catalytic filter 34C are connected together by a second central electrode 36B. The fourth catalytic filter 34D and the fifth catalytic filter 34E are connected together by a third central electrode 36C. The first catalytic filter 34A and the second catalytic filter 34B are connected together by a first outer electrode 38A. The third catalytic filter 34C and the fourth catalytic filter 34D are connected together by a second outer electrode 38B. A third outer electrode 38C acting as an external connector terminal is inserted in the fifth catalytic filter 34E. In this preheating-type catalytic converter 30, the base material and the bonding layer of the carbide cooperate to form an electrical resistor. An energizing means (not shown) is mounted between the first central electrode 36A and the third outer electrode 38C. Thus, an electrical potential is produced between the center and the outer periphery of each of the catalytic filters 34A-34E.

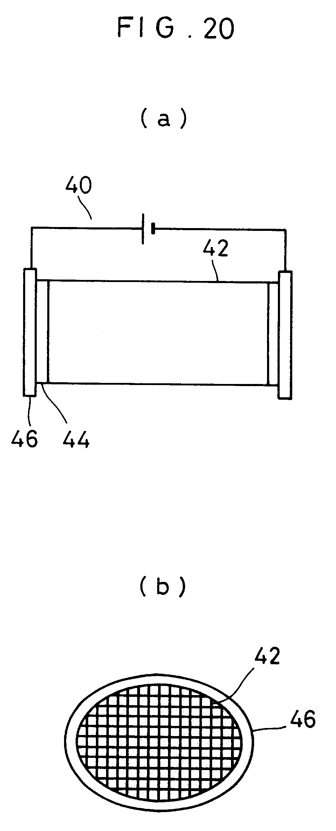

Fig. 20(a) shows the structure of the lateral surface of a preheating-type catalytic converter forming a second modification of the example as above. Fig. 20(b) is a front elevation in vertical cross section of the preheating-type catalytic converter.

The base material of the preheating-type catalytic converter 40 comprises a ceramic honeycomb structure 42 molded out of cordierite. Bonding layers are formed at both ends of the inside and at both ends of the outside of the honeycomb structure 42. In this case, the outer bonding layers 44 are made thicker than the inner bonding layers to reduce the electrical resistance of the outer bonding layers 44. Also shown are external connector terminals 46 formed on the surfaces of the outer bonding layers 44.

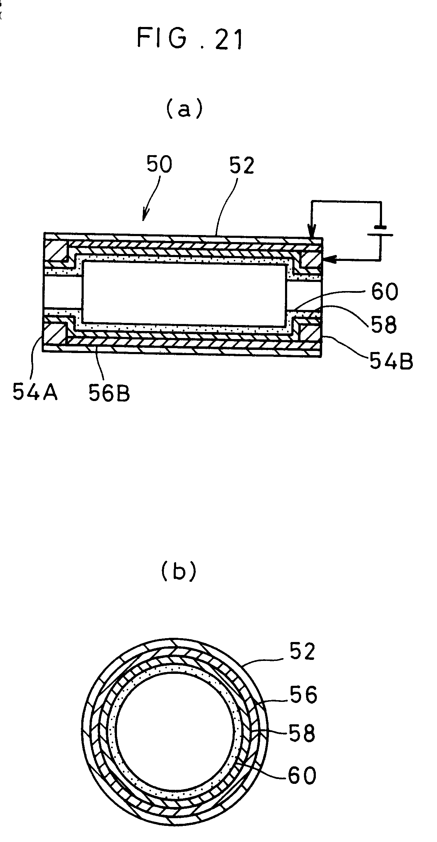

Fig. 21(a) is a side elevation in vertical cross section of an engine exhaust pipe as an example of the invention embodied in an exhaust system component other than the catalytic converter. Fig. 21(b) is a front elevation in vertical cross section of the preheating-type catalytic converting-equipped exhaust conduit.

As shown, the engine exhaust pipe, indicated by numeral 50, is made of a metallic tube 52. A first annular electrode 54A is welded to the inner surface at one end (the left end in the figures) of the tube 52. An insulating film 56 having a thickness of about 100 µm is formed from Al₂O₃ by CVD over the whole inner surface of the tube 52 except for one end. A second annular electrode 54B is mounted on the inner side of the insulating film 56 at the other end of the tube 52. Bonding layers 58 are formed on the inner surfaces of the first and second electrodes 54A and 54B and of the insulating film 56 by CVD. A catalyst layer 60 is formed on the inner surface of each bonding layer 58. An energizing means is mounted between the outer surface at the other end of the tube 52 and the second electrode 54B. When an electrical current is passed between opposite ends of each bonding layer 58, the catalyst layer 60 is heated to a high temperature.

As described in the foregoing, a catalyst bonding layer is formed on the surface of a base material by chemical vapor deposition in an exhaust gas catalytic purifier construction. The bonding layer is formed as a ceramic of columnar-shaped crystals or of an intermetallic compound, and thus it has a suitably rough surface to bond the catalyst material. The bonding layer moreover can be formed on the base material easily and rapidly. In consequence, the production efficiency is enhanced.

Since the bonding layer is formed by CVD, the layer is made uniform. Also, the bonding layer can be formed irrespective of the shape of the base material. Therefore, a bonding layer having a rough surface can be formed uniformly even on a base material the shape of which would otherwise make it difficult to form a bonding layer, or which shape may be so complex that a uniform bonding layer would be impracticable to form by conventional techniques.

In other embodiments of the exhaust gas catalytic purifier construction wherein the bonding layer serves as an electric resistor and is electrically energized, it is quickly heated to a high temperature with a small amount of electric power. Consequently, the catalyst layer quickly reaches a temperature suitable for a purification reaction. For this reason, the burden imposed on the battery during ignition of the engine is alleviated.

Wherein the bonding layer is formed of at least one carbide selected from the group consisting of tungsten carbide, molybdenum carbide, silicon carbide and alloys thereof, or from at least one silicide selected from the group consisting of tungsten silicide, molybdenum silicide, tantalum silicide, titanium silicide and alloys thereof, CVD can be effected at a any given temperature within a range from a relatively low to a relatively high temperature. This permits formation of a bonding layer on a metallic exhaust pipe or on a metallic carrier without distortion, it being noted that such a metallic exhaust pipe and metallic carrier tend to deform easily at high temperatures.

In the method of fabricating an exhaust gas catalytic purifier construction wherein metallic flat and corrugated sheets are alternately laminated to form a tiered honeycomb catalyst carrier, and subsequently a bonding layer is formed superficially thereon by CVD from a ceramic as in the foregoing, the bonding layer bonds the metallic flat sheets and the metallic corrugated sheets together, such that in addition to the advantages likewise as above, spot welding, brazing, or any other similar method which would have been needed heretofore to bond the metallic flat sheets and corrugated sheets together is dispensed with.

## Claims

1. An exhaust gas catalytic purifier of a motor vehicle internal combustion engine exhaust system, comprising:
a catalyst carrier;
a bonding layer of columnar-shaped crystals formed by chemical vapor deposition on said carrier; and
a catalyst layer formed on said bonding layer.

2. An exhaust gas catalytic purifier according to claim 1, wherein said catalyst carrier comprises a catalytic converter support structure of a catalytic conversion means.

3. An exhaust gas catalytic purifier according to claim 2, wherein said catalytic converter support structure is a filter-like lattice of carbon.

4. An exhaust gas catalytic purifier according to claim 2, wherein said catalytic converter support structure is a filter-like lattice of ceramic.

5. An exhaust gas catalytic purifier according to claim 2, wherein said catalytic converter support structure is a filter-like honeycomb structure of carbon.

6. An exhaust gas catalytic purifier according to claim 2, wherein said catalytic converter support structure is a filter-like honeycomb structure of ceramic.

7. An exhaust gas catalytic purifier according to claim 2, wherein said catalytic converter support structure is a filter-like lattice of metallic fibers.

8. An exhaust gas catalytic purifier according to claim 2, wherein said catalytic converter support structure is a filter-like mesh of metallic thin wires.

9. An exhaust gas catalytic purifier according to claim 2, wherein said catalytic converter support structure is a filter-like honeycomb metallic structure.

10. An exhaust gas catalytic purifier according to claim 2, wherein said bonding layer is energizable by electromagnetic induction, such that said catalyst is preheatable in order to effect catalytic purification of noxious exhaust fumes in advance of heating of the exhaust system by the exhausting gases.

11. An exhaust gas catalytic purifier according to claim 1, wherein said bonding layer is a low-specific heat capacity film of predetermined resistivity.

12. An exhaust gas catalytic purifier according to claim 11, wherein said bonding layer is formed from at least one carbide selected from the group consisting of tungsten carbide, molybdenum carbide, silicon carbide, and alloys thereof.

13. An exhaust gas catalytic purifier according to claim 11, wherein said bonding layer is formed from at least one silicide selected from the group consisting of tungsten silicide, molybdenum silicide, tantalum silicide, titanium silicide, and alloys thereof.

14. An exhaust gas catalytic purifier according to claim 1, wherein said bonding layer comprises columnar-structured ceramic crystals.

15. An exhaust gas catalytic purifier according to claim 1, wherein said bonding layer comprises an intermetallic compound.

16. An exhaust gas catalytic purifier according to claim 1, wherein said catalyst carrier comprises a metallic exhaust conduit of the engine exhaust system.

17. An exhaust gas catalytic purifier according to claim 16, further comprising an electrically and thermally insulating layer formed by chemical vapor deposition on said metallic exhaust conduit as said catalyst carrier, wherein said insulating layer is laminated between the carrier and said bonding layer.

18. An exhaust gas catalytic purifier according to claim 17, wherein said bonding layer is energizable by the direct application of an electrical current thereto, such that said catalyst is preheatable in order to effect catalytic purification of noxious exhaust fumes in advance of heating of the exhaust system by the exhausting gases.

19. A method of fabricating an exhaust gas catalytic purifier of an internal combustion engine exhaust system, comprising the steps of:
forming a bonding layer of columnar shaped crystals by chemical vapor deposition on a catalyst carrier of the engine exhaust system; and
coating a catalyst layer on said bonding layer.

20. A catalytic purifier fabricating method according to claim 19, wherein said catalyst carrier comprises a catalytic converter support structure of a catalytic conversion means.

21. A catalytic purifier fabricating method according to claim 19, wherein said catalyst carrier comprises a metallic exhaust conduit of the engine exhaust system.

22. A catalytic purifier fabricating method according to claim 19, wherein the step of coating said catalyst layer on said bonding layer further comprises:
impregnating an exposed surface of said bonding layer with porous alumina to form a catalyst carrier layer;
drying and sintering said catalyst carrier layer; and
applying a catalytically active component to said catalyst carrier layer by adsorption.

23. A catalytic purifier fabricating method according to claim 19, wherein said bonding layer comprises columnar-structured ceramic crystals.

24. A catalytic purifier fabricating method according to claim 19, wherein said bonding layer comprises an intermetallic compound.

25. A catalytic purifier fabricating method according to claim 20, wherein the step of forming a bonding layer onto said catalyst carrier further includes:
laminating metallic flat sheets and metallic corrugated sheets successively to form a honeycomb structured as the catalytic converter support.

26. A catalytic purifier fabricating method according to claim 19, wherein said catalyst carrier comprises a catalytic converter support structure of a catalytic conversion means for inclusion in the engine exhaust system, the method further comprising the step of:
providing an induction heating coil on said catalytic conversion means peripherally with respect to exhaust gas flow therethrough, for heating said catalyst via electromagnetic induction.

27. A catalytic purifier fabricating method according to claim 26, wherein said catalyst converter support structure comprises a metallic support network.

28. A catalytic purifier fabricating method according to claim 27, further comprising the step of providing an electrically and thermally insulating layer integrally on said metallic support network so as to encompass it peripherally.

29. A catalytic purifier fabricating method according to claim 28, wherein said induction heating coil is provided onto said electrically and thermally insulating layer; further comprising the step of securing said induction heating coil onto said catalytic conversion means by a heat-resistant material so as to retain said induction heating coil.

30. A catalytic purifier fabricating method according to claim 26, wherein said catalyst converter support structure comprises a ceramic support lattice.

31. A catalytic purifier fabricating method according to claim 30, wherein said induction heating coil is provided onto said catalyst converter support structure; further comprising the step of securing said induction heating coil onto said catalyst converter support structure by a heat-resistant material so as to retain said induction heating coil.

32. A catalytic purifier fabricating method according to claim 31, wherein said heat-resistant material is a spray-coated ceramic.

33. A catalytic purifier fabricating method according to claim 26, wherein said bonding layer, due to electrical resistivity thereof, functions as an electromagnetically conductive layer which heats through the electromagnetic induction from said induction heating coil.

34. A catalytic purifier fabricating method according to claim 26, further comprising the step of forming a catalytic conversion means preheater sub-portion as distinct from, and upstream with respect to the exhaust gas flow of, a catalytic conversion means main portion.

## Patentansprüche

1. Abgaskatalysator eines Auspuffsystems eines Verbrennungsmotors eines Kraftfahrzeugs, enthaltend:
einen Katalysatorträger;
eine Bindeschicht aus säulenförmigen Kristallen, die durch chemisches Aufdampfen auf dem Träger gebildet ist; und
eine Katalysatorschicht, die auf der Bindeschicht aufgebildet ist.

2. Abgaskatalysator gemäß Anspruch 1, wobei der Katalystorträger eine Katalysatorträgerstruktur eines katalytischen Umwandlungsmittels umfaßt.

3. Abgaskatalysator gemäß Anspruch 2, wobei die Katalysatorträgerstruktur ein filterähnliches Gitter aus Kohlenstoff ist.

4. Abgaskatalysator gemäß Anspruch 2, wobei die Katalysatorträgerstruktur ein filterähnliches Gitter aus Keramik ist.

5. Abgaskatalysator gemäß Anspruch 2, wobei die Katalysatorträgerstruktur eine filterähnliche Wabenstruktur aus Kohlenstoff ist.

6. Abgaskatalysator gemäß Anspruch 2, wobei die Katalysatorträgerstruktur eine filterähnliche Wabenstrukutur aus Keramik ist.

7. Abgaskatalysator gemäß Anspruch 2, wobei die Katalysatorträgerstruktur ein filterähnliches Gitter aus metallischen Fasern ist.

8. Abgaskatalysator gemäß Anspruch 2, wobei die Katalysatorträgerstruktur ein filterähnliches Netz aus metallischen dünnen Drähten ist.

9. Abgaskatalysator gemäß Anspruch 2, wobei die Katalysatorträgerstruktur eine filterähnliche metallische Wabenstruktur ist.

10. Abgaskatalysator gemäß Anspruch 2, wobei die Bindeschicht durch elektromagnetische Induktion erregbar ist, derart, daß der Katalysator vorheizbar ist, um die katalytische Reinigung der schädlichen Abgasdämpfe vor dem Erwärmen des Auspuffsystems durch die Abgase zu bewirken.

11. Abgaskatalysator gemäß Anpspruch 1, wobei die Bindeschicht ein Film mit geringer spezifischer Wärmekapazität mit vorbestimmtem Widerstand ist.

12. Abgaskatalysator gemäß Anspruch 11, wobei die Bindeschicht aus wenigstens einem der Karbide Wolframkarbid, Molybdänkarbid, Siliziumkarbid und/oder deren Legierungen gebildet ist.

13. Abgaskatalysator gemäß Anspruch 11, wobei die Bindeschicht aus wenigstens einem der Silicide Wolframsilicid, Molybdänsilicid, Tantalsilicid, Titansilicid und/oder deren Legierungen gebildet ist.

14. Abgaskatalysator gemäß Anspruch 1, wobei die Bindeschicht Keramikkristalle mit Säulenstruktur umfaßt.

15. Abgaskatalysator gemäß Anspruch 1, wobei die Bindeschicht eine intermetallische Verbindung umfaßt.

16. Abgaskatalysator gemäß Anspruch 1, wobei der Katalysatorträger eine metallische Abgasleitung des Fahrzeugauspuffsystems umfaßt.

17. Angaskatalysator gemäß Anspruch 16, welcher außerdem eine elektrisch und thermisch isolierende Schicht enthält, die durch chemisches Aufdampfen auf der metallischen Abgasleitung als Katalysatorträger aufgebildet ist, wobei die isolierende Schicht zwischen dem Träger und der Bindeschicht laminiert ist.

18. Abgaskatalysator gemäß Anspruch 17, wobei die Bindeschicht durch die direkte Einwirkung eines elektrischen Stroms erregbar ist, derart, daß der Katalysator vorheizbar ist, um die katalytische Reinigung von schädlichen Abgasdämpfen vor dem Erwärmen des Auspuffsystems durch die Abgase zu bewirken.

19. Verfahren zur Herstellung eines Abgaskatalysators eines Auspuffsystems eines Verbrennungsmotors mit den Stufen:
Ausbildung einer Bindeschicht aus säulenförmigen Kristallen durch chemisches Aufdampfen auf einem Katalysatorträger des Fahrzeugauspuffsystems; und
Beschichten der Bindeschicht mit einer Katalysatorschicht.

20. Verfahren zur Herstellung eines Katalysators gemäß Anspruch 19, wobei der Katalysatorträger eine Katalysatorträgerstruktur eines katalytischen Umwandlungsmittels umfaßt.

21. Verfahren zur Herstellung eines Katalysators gemäß Anspruch 19, wobei der Katalysatorträger eine metallische Abgasleitung des Fahrzeugauspuffsystems umfaßt.

22. Verfahren zur Herstellung eines Katalysators gemäß Anspruch 19, wobei die Stufe des Beschichtens der Bindeschicht mit der Katalysatorschicht außerdem
das Imprägnieren einer exponierten Oberfläche der Bindeschicht mit porösem Aluminiumoxid zur Bildung einer Katalysatorträgerschicht,
das Trocknen und Sintern der Katalysatorträgerschicht und
das Auftragen einer katalytisch aktiven Komponente auf die Katalysatorträgerschicht durch Adsorption umfaßt.

23. Verfahren zur Herstellung eines Katalysators gemäß Anspruch 19, wobei die Bindeschicht Keramikkristalle mit Säulenstruktur umfaßt.

24. Verfahren zur Herstellung eines Katalysators gemäß Anspruch 19, wobei die Bindeschicht eine intermetallische Verbindung umfaßt.

25. Verfahren zur Herstellung eines Katalysators gemäß Anspruch 20, wobei die Stufe der Aufbildung einer Bindeschicht auf den Katalysatorträger außerdem
das sukzessive Laminieren metallischer Flachbleche und metallischer Wellbleche zur Bildung einer Wabenstruktur als Katalysatorträger umfaßt.

26. Verfahren zur Herstellung eines Katalysators gemäß Anspruch 19, wobei der Katalysatorträger eine Katalysatorträgerstruktur eines katalytischen Umwandlungsmittels zur Einbringung in das Fahrzeugauspuffsystem umfaßt, wobei das Verfahren außerdem die Stufe des
Anbringens einer Induktionsheizspule auf dem katalytischen Umwandlungsmittel peripher zum durchlaufenden Abgasfluß zur Erwärmung des Katalysators über elektromagnetische Induktion umfaßt.

27. Verfahren zur Herstellung eines Katalysators gemäß Anspruch 26, wobei die Katalysatorträgerstruktur ein metallisches Trägernetzwerk umfaßt.

28. Verfahren zur Herstellung eines Katalysators gemäß Anspruch 27, welches außerdem die Stufe des Aufbringens einer elektrisch und thermisch isolierenden Schicht integral auf dem metallischen Trägernetzwerk, so daß dieses peripherisch umgeben wird, umfaßt.

29. Verfahren zur Herstellung eines Katalysators gemäß Anspruch 28, wobei die Induktionsheizspule auf der elektrisch und thermisch isolierenden Schicht angebracht ist, welches außerdem die Stufe des Befestigens der Induktionsheizspule auf dem katalytischen Umwandlungsmittel durch ein hitzebeständiges Material umfaßt, so daß die Induktionsheizspule gehalten wird.

30. Verfahren zur Herstellung eines Katalysators gemäß Anspruch 26, wobei die Katalysatorträgerstruktur ein keramisches Trägergitter umfaßt.

31. Verfahren zur Herstellung eines Katalysators gemäß Anspruch 30, wobei die Induktionsheizspule auf der Katalysatorträgerstruktur angebracht ist, welches außerdem die Stufe des Befestigens der Induktionsheizspule auf der Katalysatorträgerstruktur durch ein hitzebeständiges Material umfaßt, so daß die Induktionsheizspule gehalten wird.

32. Verfahren zur Herstellung eines Katalysators gemäß Anspruch 31, wobei das hitzebeständige Material eine durch Sprühen aufgeschichtete Keramik ist.

33. Verfahren zur Herstellung eines Katalysators gemäß Anspruch 26, wobei die Bindeschicht aufgrund ihres elektrischen Widerstands als elektromagnetisch leitende Schicht, welche durch die elektromagnetische Induktion von der Induktionsheizspule heizt, fungiert.

34. Verfahren zur Herstellung eines Katalysators gemäß Anspruch 26, welches außerdem die Stufe der Bildung eines Vorwärmunterbereichs des katalytischen Umwandlungsmittels, getrennt von dem Hauptbereich des katalytischen Umwandlungsmittels, und stromaufwärts hinsichtlich des Abgasflusses umfaßt.

## Revendications

1. Purificateur catalytique de gaz d'échappement d'un système d'échappement de moteur à combustion interne de véhicule à moteur, comportant :
un support de catalyseur,
une couche de fixation constituée de cristaux ayant une forme de colonne formée par dépôt chimique en phase vapeur sur ledit support, et
une couche de catalyseur formée sur ladite couche de fixation.

2. Purificateur catalytique de gaz d'échappement selon la revendication 1, dans lequel ledit support de catalyseur est constitué d'une structure de support de convertisseur catalytique constituée de moyens de conversion catalytique.

3. Purificateur catalytique de gaz d'échappement selon la revendication 2, dans lequel ladite structure de support de convertisseur catalytique est un treillis de carbone analogue à un filtre.

4. Purificateur catalytique de gaz d'échappement selon la revendication 2, dans lequel ladite structure de support de convertisseur catalytique est un treillis de céramique analogue à un filtre.

5. Purificateur catalytique de gaz d'échappement selon la revendication 2, dans lequel ladite structure de support de convertisseur catalytique est une structure de carbone en nid d'abeilles analogue à un filtre.

6. Purificateur catalytique de gaz d'échappement selon la revendication 2, dans lequel ladite structure de support de convertisseur catalytique est une structure de céramique en nid d'abeilles analogue à un filtre.

7. Purificateur catalytique de gaz d'échappement selon la revendication 2, dans lequel ladite structure de support de convertisseur catalytique est un treillis de fibres métalliques analogue à un filtre.

8. Purificateur catalytique de gaz d'échappement selon la revendication 2, dans lequel ladite structure de support de convertisseur catalytique est un ensemble de mailles de fils métalliques fins analogue à un filtre.

9. Purificateur catalytique de gaz d'échappement selon la revendication 2, dans lequel ladite structure de support de convertisseur catalytique est une structure métallique en nid d'abeilles analogue à un filtre.

10. Purificateur catalytique de gaz d'échappement selon la revendication 2, dans lequel ladite couche de fixation peut recevoir de l'énergie par induction électromagnétique, de sorte que ledit catalyseur peut être préchauffé afin d'effectuer une purification catalytique des fumées d'échappement nocives avant le chauffage du système d'échappement par les gaz d'échappement.

11. Purificateur catalytique de gaz d'échappement selon la revendication 1, dans lequel ladite couche de fixation est un film de capacité thermique spécifique faible ayant une résistivité prédéterminée.

12. Purificateur catalytique de gaz d'échappement selon la revendication 11, dans lequel ladite couche de fixation est formée à partir d'au moins un carbure sélectionné dans le groupe constitué de carbure de tungstène, carbure de molybdène, carbure de silicium, et d'alliages de ceux-ci.

13. Purificateur catalytique de gaz d'échappement selon la revendication 11, dans lequel ladite couche de fixation est formée à partir d'au moins un siliciure sélectionné dans le groupe constitué de siliciure de tungstène, siliciure de molybdène, siliciure de tantale, silicium de titane, et d'alliages de ceux-ci.

14. Purificateur catalytique de gaz d'échappement selon la revendication 1, dans lequel ladite couche de fixation est constituée de cristaux de céramique structurés en colonne.

15. Purificateur catalytique de gaz d'échappement selon la revendication 1, dans lequel ladite couche de fixation est constituée d'une composition intermétallique.

16. Purificateur catalytique de gaz d'échappement selon la revendication 1, dans lequel ledit support de catalyseur est constitué d'un conduit d'échappement métallique du système d'échappement du moteur.

17. Purificateur catalytique de gaz d'échappement selon la revendication 16, comportant de plus une couche électriquement et thermiquement isolante formée par dépôt chimique en phase vapeur sur ledit conduit d'échappement métallique en tant que dit support de catalyseur, ladite couche isolante étant stratifiée entre le support et ladite couche de fixation.

18. Purificateur catalytique de gaz d'échappement selon la revendication 17, dans lequel ladite couche de fixation peut recevoir de l'énergie par l'application directe d'un courant électrique, de sorte que ledit catalyseur peut être préchauffé afin d'effectuer une purification catalytique des fumées d'échappement nocives avant chauffage du système d'échappement par les gaz d'échappement.

19. Procédé de fabrication de purificateur catalytique de gaz d'échappement d'un système d'échappement de moteur à combustion interne, comportant les étapes consistant à :
former une couche de fixation sous forme de cristaux ayant une forme de colonne par dépôt chimique en phase vapeur sur un support de catalyseur du système d'échappement du moteur, et
revêtir une couche de catalyseur sur ladite couche de fixation.

20. Procédé de fabrication de purificateur catalytique selon la revendication 19, dans lequel ledit support de catalyseur est constitué d'une structure de support de convertisseur catalytique constituée de moyens de conversion catalytique.

21. Procédé de fabrication de purificateur catalytique selon la revendication 19, dans lequel ledit support de catalyseur est constitué d'un conduit d'échappement métallique du système d'échappement du moteur.

22. Procédé de fabrication de purificateur catalytique selon la revendication 19, dans lequel l'étape consistant à revêtir ladite couche de catalyseur sur ladite couche de fixation comporte de plus les étapes consistant à :
imprégner une surface exposée de ladite couche de fixation d'alumine poreuse pour former une couche de support de catalyseur,
sécher et fritter ladite couche de support de catalyseur, et
appliquer un constituant catalytiquement actif sur ladite couche de support de catalyseur par adsorption.

23. Procédé de fabrication de purificateur catalytique selon la revendication 19, dans lequel ladite couche de fixation est constituée de cristaux de céramique ayant une structure de colonne.

24. Procédé de fabrication de purificateur catalytique selon la revendication 19, dans lequel ladite couche de fixation est constituée d'une composition intermétallique.

25. Procédé de fabrication de purificateur catalytique selon la revendication 20, dans lequel l'étape consistant à former une couche de fixation sur ledit support de catalyseur comporte de plus les étapes consistant à :
stratifier des feuilles métalliques plates et des feuilles métalliques ondulées successivement pour former une structure en nid d'abeilles en tant que support de convertisseur catalytique.

26. Procédé de fabrication de purificateur catalytique selon la revendication 19, dans lequel ledit support de catalyseur est constitué d'une structure de support de convertisseur catalytique constituée de moyens de conversion catalytique pour inclusion dans le système d'échappement du moteur, le procédé comportant de plus l'étape consistant à :
agencer une bobine de chauffage par induction sur lesdits moyens de conversion catalytique périphériquement par rapport à l'écoulement de gaz d'échappement à travers ceux-ci, pour chauffer ledit catalyseur via une induction électromagnétique.

27. Procédé de fabrication de purificateur catalytique selon la revendication 26, dans lequel ladite structure de support de convertisseur catalytique est constituée d'un réseau de support métallique.

28. Procédé de fabrication de purificateur catalytique selon la revendication 27, comportant de plus l'étape consistant à fournir une couche électriquement et thermiquement isolante formant un tout avec le réseau de support métallique de manière à l'entourer périphériquement.

29. Procédé de fabrication de purificateur catalytique selon la revendication 28, dans lequel ladite bobine de chauffage par induction est agencée sur ladite couche électriquement et thermiquement isolante, comportant de plus l'étape consistant à fixer ladite bobine de chauffage par induction sur lesdits moyens de conversion catalytique par un matériau résistant à la chaleur de manière à maintenir ladite bobine de chauffage par induction.

30. Procédé de fabrication de purificateur catalytique selon la revendication 26, dans lequel ladite structure de support de convertisseur catalytique est constituée d'un treillis de support céramique.

31. Procédé de fabrication de purificateur catalytique selon la revendication 30, dans lequel ladite bobine de chauffage par induction est agencée sur ladite structure de support de convertisseur catalytique, comportant de plus l'étape consistant à fixer ladite bobine de chauffage par induction sur ladite structure de support de convertisseur catalytique par un matériau résistant à la chaleur de manière à maintenir ladite bobine de chauffage par induction.

32. Procédé de fabrication de purificateur catalytique selon la revendication 31, dans lequel ledit matériau résistant à la chaleur est une céramique revêtue par pulvérisation.

33. Procédé de fabrication de purificateur catalytique selon la revendication 26, dans lequel ladite couche de fixation, du fait de la résistivité électrique de celle-ci, agit comme une couche électromagnétiquement conductrice qui chauffe par l'intermédiaire de l'induction électromagnétique provenant de ladite bobine de chauffage par induction.

34. Procédé de fabrication de purificateur catalytique selon la revendication 26, comportant de plus l'étape consistant à former une sous-partie de préchauffage des moyens de conversion catalytique sous une forme distincte d'une partie principale des moyens de conversion catalytique, et en amont par rapport à l'écoulement des gaz d'échappement.
